# EUROPEAN PATENT APPLICATION

(11) **EP 1 304 350 A1**
(43) Date of publication of application: **23.04.2003**
(21) Application number: 02023094.2
(22) Date of filing: 17.10.2002
(51) Int. Cl.: C08K 5/00, C08K 5/521, C08L 69/00, C08L 71/12

(54) **Flame-retardant resin composition**

(30) Priority: 17.10.2001 JP 2001319204; 11.09.2002 JP 2002266036
(71) Applicant: Asahi Denka Co., Ltd., Tokyo (JP)
(72) Inventor: Kimura, Ryoji, Saitama-shi, Saitama (JP); Kamimoto, Tetsuo, Saitama-shi, Saitama (JP); Hayashi, Kazuhiko, Saitama-shi, Saitama (JP); Yukutake, Hideaki, Saitama-shi, Saitama (JP); Nishiyama, Takeshi, Saitama-shi, Saitama (JP)
(74) Representative: Forstmeyer, Dietmar, Dr. rer. nat., Dipl.-Chem.

(57) **Abstract**

A flame-retardant resin composition is disclosed. The composition comprises (A) 100 parts by weight of a synthetic resin, (B) 0.5 to 30 parts by weight of a phosphoric ester flame retardant, (C) 0.005 to 5 parts by weight of an organic phosphoric ester metal salt and (D) 0.05 to 5 parts by weight of an anti-dripping agent.

## Description

### Background of the Invention

The present invention relates to a flame-retardant resin composition with improved flame retardancy. More particularly it relates to a synthetic resin composition containing a phosphoric ester flame retardant which further contains a specific organic phosphoric ester metal salt to have improved flame retardancy.

Polycarbonate resins and polymer blends comprising a polycarbonate resin and an impact-strength styrene resin, e.g., ABS or AS, are widely used as housing materials in the fields of electric and electronic equipment, communications equipment, and office automation equipment including copiers, printers, facsimiles, and personal computers because of their excellent performance in weather resistance, heat resistance and impact resistance. They are also expected as substitutes for metallic parts of automobiles.

Molded parts of these resin compositions are required to have flame retardancy. Flame retardancy of resin compositions are evaluated based on UL Subject 94 (Underwriters' Laboratories, Standard for Safety, hereinafter referred to as UL-94). In the established tests of UL-94, flame retardancy is rated according to the burning time (the time required to self-extinguish after ignition) and resistance to drip, and the resin compositions for the above applications are required to have no drips and a short burning time.

While flame retardation systems comprising an organic halogen compound and antimony trioxide have conventionally been employed for flame retardation of synthetic resin compositions, it has now been demanded to use halogen-free flame retardants in view of contamination of molds with halogen compounds, toxic gases generated on combustion, and environmental conservation.

To address the problem, it has been studied to apply phosphorus-based flame retardants, typified by aromatic phosphoric esters, to polycarbonate resins and polymer blends of polycarbonate resins and styrene resins. For example U.S. Patents 5,204,394 and 5,112,556, JP-A-5-262940, JP-A-7-26129, and JP-A-10-168273 disclose use of phosphoric ester flame retardants.

However, phosphoric ester flame retardants should be used in large quantities to manifest high flame retardancy, which can adversely affect the physical properties of resulting molded parts. It has been difficult therefore to achieve both flame retardancy and physical properties of molded parts with phosphoric ester flame retardants.

For flame retardation of synthetic resins, JP-B-42-9006 proposes adding a metal salt of an organic phosphoric ester, and JP-B-48-29614 proposes a combined use of a phosphite compound and an organic phosphoric ester metal salt. These flame retardants are disadvantageous in that: (1) they produce insufficient effects when added in small amounts, (2) they are little effective on polymer blends containing styrene resins, and (3) resin compositions containing them in increased amounts considerably drip in the flammability test.

JP-A-11-21458 discloses a flame-retardant thermoplastic resin composition containing two kinds of phosphoric ester condensates and zinc stearate as a metal compound. The flame retardant effect of the system disclosed is still insufficient.

JP-A-13-11297 proposes adding a metal salt of an organic cyclic phosphoric ester. The flame retardant disclosed produces insufficient effects on polymer blends, such as polycarbonate-ABS polymer blends.

Japanese Patent 2888860 teaches addition of an alkali metal salt of an organic phosphoric ester to a polycarbonate resin. Because the proposed organic phosphoric ester alkali metal salt decomposes in low temperatures to release the alkali metal, which decomposes the polycarbonate in resin processing.

An object of the present invention is to provide a flame-retardant resin composition exhibiting excellent flame retardancy as well as satisfactory physical properties.

### Summary of the Invention

As a result of extensive investigations, the present inventors have found that high flame retardancy can be imparted to a resin by using a specific organic phosphoric ester metal salt as a flame retardation assistant in combination with a phosphoric ester flame retardant thereby excluding the need of using the phosphoric ester flame retardant in such a large quantity as to spoil the physical properties of the resin. The present invention has been reached based on this finding.

The present invention provides a flame-retardant resin composition comprising (A) 100 parts by weight of a synthetic resin, (B) 0.5 to 30 parts by weight of a phosphoric ester flame retardant represented by formula (1): 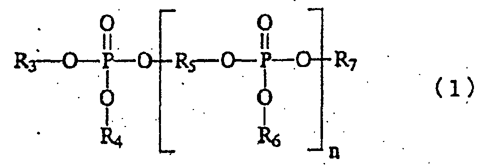 wherein R₃, R₄, R₆, and R₇, which may be the same or different, each represent an alkyl group having 1 to 10 carbon atoms or an aromatic group represented by formula (2); R₅ represents a divalent aromatic group represented by formula (3) or (4); and n represents 0 to 30; 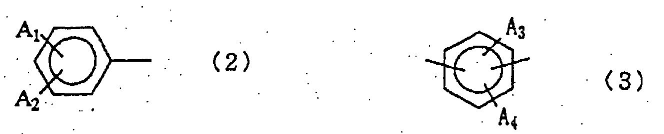 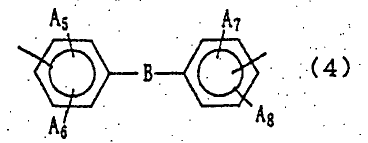 wherein A₁ and A₂ each independently represent a hydrogen atom, a hydroxyl group or an alkyl group having 1 to 10 carbon atoms; A₃, A₄, A₅, A₆, A₇, and A₈ each represent a hydrogen atom, an alkyl group having 1 to 4 carbon atoms, a cycloalkyl group, an aryl group, an alkoxy group, a nitro group, a halogen atom or a cyano group; B represents a single bond, a divalent sulfur atom, a sulfone group, an alkylidene group having 1 to 5 carbon atom or an alkylene group having 1 to 5 carbon atoms,
(C) 0.005 to 5 parts by weight of an organic phosphoric ester metal salt represented by formula (5) or (6): 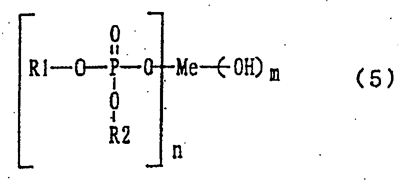 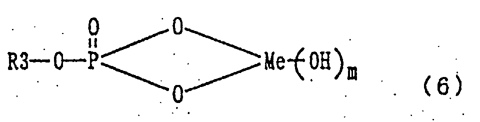 wherein R₁, R₂, and R₃ each independently represent an alkyl group having 1 to 30 carbon atoms, an aryl group or an aryl group substituted with an alkyl group, an alkoxy group, a cycloalkyl group, a phenyl group, a phenoxy group or -COOR₄, or R₁ and R₂ are taken together to form an alkylene group; R₄ represents a hydrogen atom or an alkyl group having 1 to 18 carbon atoms;
Me represents Ca, Mg, Zn or Al; n represents 1 or 2; and m represents 0 or 1,
and (D) 0.05 to 5 parts by weight of an anti-dripping agent.

### Detailed Description of the Preferred Embodiments

The synthetic resin as component (A) includes thermoplastic resins and thermosetting resins. The thermoplastic resins include polyolefin resins, such as α-olefin homopolymers, e.g., polypropylene, high-density polyethylene, low-density polyethylene, linear low-density polyethylene, polybutene-1, and poly-3-methylpentene, olefin copolymers, e.g., ethylene-vinyl acetate copolymers and ethylene-propylene copolymers; halogen-containing resins, e.g., polyvinyl chloride, polyvinylidene chloride, chlorinated polyethylene, chlorinated polypropylene, polyvinylidene fluoride, chlorinated rubber, vinyl chloride-vinyl acetate copolymers, vinyl chloride-ethylene copolymers, vinyl chloride-vinylidene chloride copolymers, vinyl chloride-vinylidene chloride-vinyl acetate terpolymers, vinyl chloride-acrylic ester copolymers, vinyl chloride-maleic ester copolymers, and vinyl chloride-cyclohexylmaleimide copolymers; petroleum resins, coumarone-indene resins, polystyrene, polyvinyl acetate, acrylic resins; copolymers of styrene (and/or α-methylstyrene) and other monomers (e.g., maleic anhydride, phenylmaleimide, methyl methacrylate, butadiene, and acrylonitrile), such as AS resins, ABS resins, MBS resins, and heat-resistant ABS resins; polymethyl methacrylate, polyvinyl alcohol, polyvinyl formal, polyvinyl butyral; linear polyesters, e.g., polyethylene terephthalate and polybutylene terephthalate; polyphenylene ethers; polyamides, e.g., polycaprolactam and polyhexamethylene adipamide; polycarbonate resins, polycarbonate/ABS resins, branched polycarbonate, polyacetal, polyphenylene sulfide, polyurethane, and cellulosic resins; and polymer blends of these thermoplastic resins. The thermosetting resins include phenol resins, urea resins, melamine resins, epoxy resins, and unsaturated polyester resins. Also included under the resin (A) are elastomers, such as isoprene rubber, butadiene rubber, acrylonitrile-butadiene copolymer rubber, and styrene-butadiene copolymer rubber.

Of these resins, polycarbonate resins, styrene resins, polyphenylene ethers, and mixtures thereof, which are particularly difficult to make flame-retardant, are suitable as a resin to which the specific flame retardant system of the present invention is applied to provide flame-retardant resin compositions.

The polycarbonate resins as referred to herein are polymers having carbonate bonds, which are obtained from a monocyclic or polycyclic aromatic compound containing two or more hydroxyl groups each directly bonded to the aromatic carbon atoms (hereinafter referred to as an aromatic polyhydroxy compound) and a carbonate precursor. The polycarbonate resins are not restricted by the production process, the chain terminator used in the production, the molecular weight, and the like. The polycarbonate resins may have a branched structure. Two or more polycarbonate resins can be used in combination. The polycarbonate resins may be used in combination with other polymers known useful to make polymer blends with polycarbonate resins, such as polyesters.

The polycarbonate resins generally include those obtained from an aromatic dihydroxy compound and a carbonate precursor, which are represented by formula (9): 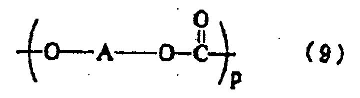 wherein A represents a residue of an aromatic dihydroxy compound used in polymerization reaction, which is represented by formula (a) or (b), and p represents a degree of polymerization, which is a number of 2 or greater.: 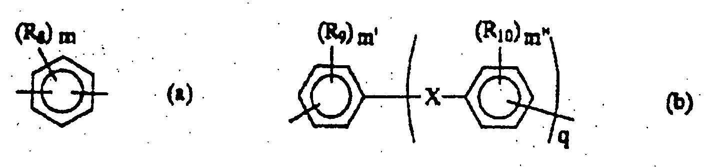 wherein R₈, R₉, and R₁₀ each independently represent a hydrogen atom, a halogen atom, an alkyl group, an alkoxy group, a cycloalkyl group, an aryl group or an alkylaryl group; m, m', and m" each represent an integer of 0 to 4; q represents an integer of 0 to 2; and X represents an alkylene group, a cycloalkylidene group, a single bond, -S-, -S-S-, -O-, -S(=O)-, -(O=)S(=O)-or -C(=O)-.

In formula (9), R₈, R₉ and R₁₀ each independently represent a hydrogen atom; a halogen atom, such as fluorine, chloride, bromine, and iodine; an alkyl group, such as methyl, ethyl, propyl, isopropyl, butyl, sec-butyl, t-butyl, isobutyl, amyl, isoamyl, t-amyl, hexyl, cyclohexyl, heptyl, isoheptyl, t-heptyl, n-octyl, isooctyl, t-octyl, and 2-ethylhexyl; an alkoxy group, such as one derived from the alkyl group; a cycloalkyl group, such as cyclobutyl, cyclopentyl, cyclohexyl or a derivative thereof; an aryl group, such as phenyl, methylphenyl, dimethylphenyl, ethylphenyl, octylphenyl, chlorophenyl, bromophenyl or naphthyl; or an alkylaryl group, such as benzyl or phenethyl. The alkylene group as X includes methylene, ethylene, ethane-1,1-diyl, propylene, propane-2,2-diyl, 1-methylethylene, butylene, 1-methylpropylene, 2-methylpropylene, 2,2-dimethylpropylene, 1,3-dimethylpropylene, butylene, 1-methylbutylene, 2-methylbutylene, 3-methylbutylene, 4-methylbutylene, 2,4-dimethylbutylene, 1,3-dimethylbutylene, pentylene, hexylene, heptylene, and octylene. The cyclopalkylene group as X includes cyclopentylidene, cyclohexylidene, and derivatives thereof.

The aromatic polyhydroxy compounds used as a starting material for the polycarbonate resins include those having the above-defined moiety A of formula (9). Examples of such compounds are dihydroxybenzenes, e.g., resorcin, catechol, hydroquinone, 3-methylresorcin, 3-ethylresorcin, 3-propylresorcin, 3-butylresorcin, 3-t-butylresorcin, 3-phenylresorcin, 3-cumylresorcin, 3-methylhydroquinone, 3-ethylhydroquinone, 3-propylhydroquinone, 3-butylhydroquinone, 3-t-butylhydroquinoen, 3-phenylhydroquinoen, and 3-cumylhydroquinone; bishydroxyaryls, e.g., 4,4'-dihydroxydiphenyl; bis(hydroxyaryl)cycloalkanes, e.g., 1,1-bis(4-hydroxyphenyl)-2,4,4-trimethylcyclopentane, 1,1-bis(4-hydroxyphenyl)cyclohexane, 1,1-bis(4-hydroxyphenyl)-3,3-dimethylcyclohexane, 1,1-bis(4-hydroxyphenyl)cyclohexane, 1,1-bis(4-hydroxyphenyl)-3,3,5-trimethylcyclohexane, 1,1-bis(4-hydroxy-3,5-dimethylphenyl)cyclohexane, 1,1-bis(4-hydroxyphenyl)cyclododecane, 1,1-bis(4-hydroxy-3,5-dimethylphenyl)cyclododecane, and 1,1-bis(4-hydroxyphenyl)cyclododecane; bis(hydroxyaryl)aryls, e.g., 1,4-bis(4-hydroxyphenylsulfonyl)benzene and 4,4-bis(4-hydroxyphenylsulfonyl)benzene; bis(hydroxyaryl)alkanes, e.g., bis(4-hydroxyphenyl)methane, 1,1-bis(4hydroxyphenyl)ethane, 1,2-bis(4-hydroxyphenoxy)ethane, 1,4-bis(4-hydroxyphenyl)propane, 2,2-bis(4-hydroxyphenyl)propane, 2,2-bis(3-chloro-4-hydroxyphenyl)propane, 2,2-bis(3,5-dichloro-4-hydroxyphenyl)propane, 2,2-bis(4-hydroxy-3,5-dimethylphenyl)propane, 2,2-bis(4-hydroxy-3,5-dibromophenyl)propane, 2,2-bis(4-hydroxyphenyl-3-methylphenyl)propane, 2,2-bis(4-hydroxyphenyl-3-cyclohexylphenyl)propane, 2,2-bis(4-hydroxy-3-t-butylphenyl)propane, 2,2-bis(4-hydroxyphenyl-3-methoxyphenyl)propane, 1,1-bis(4-hydroxyphenyl)butane, 1,1 -bis(4-hydroxyphenyl)isobutane, 2,2-bis(4-hydroxy)butane, and 2,4-bis(4-hydroxyphenyl-2-methyl)butane; dihydroxyaryl ketones, e.g., bis(4-hydroxyphenyl) ketone and bis(4-hydroxy-3-methylphenyl) ketone; dihydroxyaryl ethers, e.g., 4,4'-dihydroxydiphenyl ether, 4,4'-dihydroxy-3,3'-dimethylphenyl ether, and 4,4'-dihydroxy-2,5-dihydroxydiphenyl ether; dihydroxyaryl sulfur compounds, e.g., 4,4'-thiodiphenol, bis(4-hydroxyphenyl) sulfide, 4,4'-dihydroxy-3,3'-dimethyldiphenyl sulfide, 4,4'-dihydroxy-3,3'-dimethyldiphenyl sulfoxide, 2,2'-bis(4-hydroxyphenyl) sulfone, 4,4'-dihydroxydiphenyl sulfone, and 4,4'-dihydroxy-3,3'-dimethyldiphenyl sulfone; and phenolphthalein. The aromatic polyhydroxy compounds used as a starting material for the polycarbonate resins also include those having a condensed ring, such as 2,2,2',2'-tetrahydro-3,3,3',3'-tetramethyl-1,1'-spirobis(1H-indene)-7,7'-diol. These aromatic dihydroxy compounds can be used either individually or as a mixture of two or more thereof. They are also used in combination with aromatic polyhydroxy compounds having three or more hydroxyl groups per molecule.

The carbonate precursor which is another starting material for the polycarbonate resins includes carbonyl halides, carbonyl esters, and haloformates. Suitable examples are phosgene, carbonic diesters, diphenyl carbonate, dihaloformates of dihydric phenols, and mixtures thereof.

The polycarbonate resins preferably have a molecular weight of 10,000 to 200,000, particularly 20,000 to 60,000. Those having a molecular weight less than 10,000 tend to provide molded parts with reduced impact resistance. Those having a molecular weight exceeding 200,000 tend to have insufficient flowability for processing.

To obtain a controlled molecular weight as recited above, a chain terminator can be used in the production of the polycarbonate resins. Suitable chain terminators include phenol compounds, such as phenol, p-chlorophenol, p-t-butylphenol, 2,4,6-tribromophenol, 4-(1,3-tetramethylbutyl)phenol, long-chain alkylphenols, e.g., 3,5-di-t-butylphenol, p-isooctylphenol, p-t-octylphenol, and p-dodecylphenol, 2-(3,5-dimethylheptyl)phenol, and 4-(3,5-dimethylheptyl)phenol. The chain terminator is usually used in amounts of 0.5 to 10 mol% based on the aromatic polyhydroxy compound.

The styrene resin which can be used in combination with the polycarbonate resin is a polymer obtained from an aromatic vinyl compound typified by styrene as an essential monomer and copolymerizable monomers as an optional component. The styrene resin to be used is not particularly restricted by the structure, the production process, the molecular weight, etc.

The aromatic vinyl compound which can be used to produce the styrene resin includes styrene, vinylnaphthalene, and styrene substituted with 1 to 5 substituents selected from a halogen atom, an alkyl group, and an alkenyl group, such as α-methylstyrene, o-methylstyrene, m-methylstyrene, p-methylstyrene, ethylstyrene, monochlorostyrene, dichlorostyrene, monobromostyrene, dibromostyrene, fluorostyrene, and p-t-butylstyrene. The copolymerizable monomers include vinyl cyanides, such as acrylonitrile and methacrylonitrile; α,β-unsaturated carboxylic acids, such as acrylic acid and methacrylic acid; α,β-unsaturated carboxylic esters, such as alkyl acrylates or methacrylates having 1 to 8 carbon atoms in the alkyl moiety; α,β-unsaturated dicarboxylic acid anhydrides and derivatives thereof, such as maleic anhydride and itaconic anhydride; α,β-unsaturated carboxylic acid imides, such as maleimide, N-maleimide, N-methylmaleimide, N-ethylmaleimide, N-phenylmaleimide, and N-o-chlorophenylmaleimide; conjugated diene compounds, such as isoprene, butadiene, and chloroprene; epoxy-modified conjugated diene compounds; olefins, such as ethylene and propylene; and vinyl acetate.

It is sufficient for the styrene resin to comprise at least one aromatic vinyl compound. Two or more styrene resins can be used as a mixture. Such a mixture include one prepared by blending (melt blending, kneading, melt casting or solution process) and one prepared by copolymerization (graft, block, random, alternating, etc.), melt grafting, and block grafting.

The kind and the amount of the styrene resin to be used are decided according to the physical properties required of moldings. For example, ABS resins are preferred for housings and automotive parts applications, which are preferably used in a proportion of 1 to 50%, particularly 10 to 40%, by weight with respect to the polycarbonate resin.

The polymer blend comprising the polycarbonate resin and the styrene resin is not particularly limited by the production process, molecular weight, and the like.

The polyphenylene ether resins which can be used as component (A) include homo- or copolymers having a repeating unit(s) represented by formulae (10a) and/or (10b): 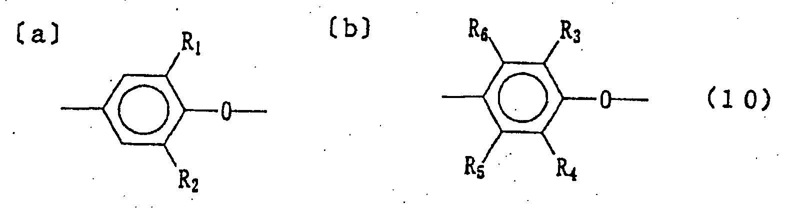 wherein R₁, R₂, R₃, R₄, R₅, and R₆ each independently represent a monovalent group or atom, such as an alkyl group having 1 to 4 carbon atoms, an aryl group, a halogen atom or a hydrogen atom, provided that R₅ and R₆ do not simultaneously represent hydrogen.

Typical examples of polyphenylene ether homopolymers are poly(2,6-dimethyl-1,4-phenylene ether), poly(2-methyl-6-ethyl-1,4-phenylene ether), poly(2,6-diethyl-1,4-phenylene ether), poly(2-ethyl-6-n-propyl-1,4-phenylene ether), poly(2,6-di-n-propyl-1,4-phenylene ether), poly(2-methyl-6-n-butyl-1,4-phenylene ether), poly(2-ethyl-6-isopropyl-1,4-phenylene ether), poly(2-methyl-6-chloroethyl-1,4-phenylene ether), poly(2-methyl-6-hydroxyethyl-1,4-phenylene ether), and poly(2-methyl-6-chloroethyl-1,4-phenylene ether).

The polyphenylene ether copolymers include those mainly comprising a polyphenylene ether structure, such as a 2,6-dimethylphenol-2,3,6-trimethylphenol copolymer, a 2,6-dimethylphenol-o-cresol copolymer, and a 2,3,6-trimethylphenol-o-cresol copolymer.

The styrene resins which can be used in combination with the polyphenylene ether resins include those enumerated above.

The phosphoric ester flame retardant used as component (B) is represented by formula (1). In formulae (1) and (2), the alkyl group as R₃, R₄, R₆, R₇, A₁, and A₂ includes methyl, ethyl, propyl, isopropyl, butyl, isobutyl, sec-butyl, t-butyl, amyl, t-amyl, hexyl, 2-ethylhexyl, n-octyl, nonyl, and decyl. In formulae (3) and (4), A₃, A₄, A₅, A₆, A₇, and A₈ each represent a hydrogen atom, an alkyl group having 1 to 4 carbon atoms, such as methyl, ethyl, propyl, butyl, isobutyl, sec-butyl or t-butyl; a cycloalkyl group, e.g., cyclohexyl; an aryl group, e.g., phenyl, cresyl, xylyl, 2,6-xylyl, 2,4,6-trimethylphenyl, butylphenyl or nonylphenyl; an alkoxy group, e.g., methoxy, ethoxy, propoxy or butoxy; a nitro group; a halogen atom, e.g., fluorine, chlorine or bromine; or a cyano group. The aromatic group as represented by formula (2) includes phenyl, cresyl, xylyl, 2,6-xylyl, butylphenyl, and nonlylphenyl. The alkylidene group having 1 to 5 carbon atoms as represented by B in formula (4) includes ethylidene and isopropylidene. The alkylene group having 1 to 5 carbon atoms as represented by B includes methylene, ethylene, trimethylene, and tetramethylene.

In formula (1), n is 0 to 30, preferably 1 to 10.

Specific examples of the phosphoric ester flame retardant represented by formula (1) include compounds A to E shown below.

### Compound A:

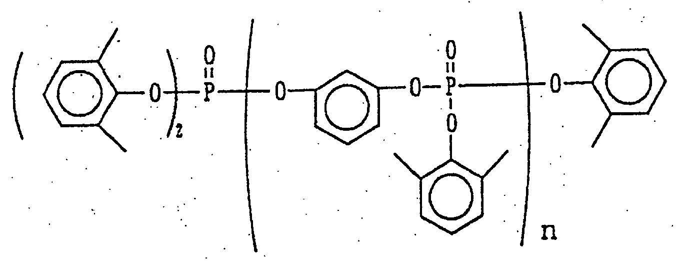

where n is a number of 1 to 5.

### Compound B:

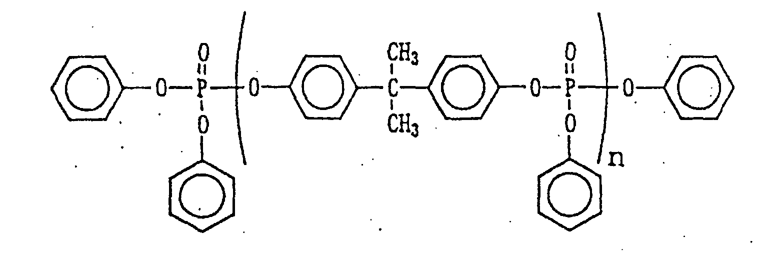

where n is a number of 1 to 5.

### Compound C:

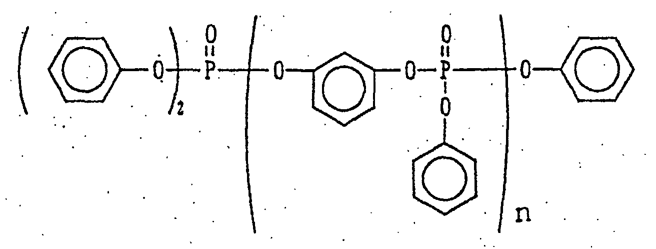

where n is a number of 1 to 5.

### Compound D:

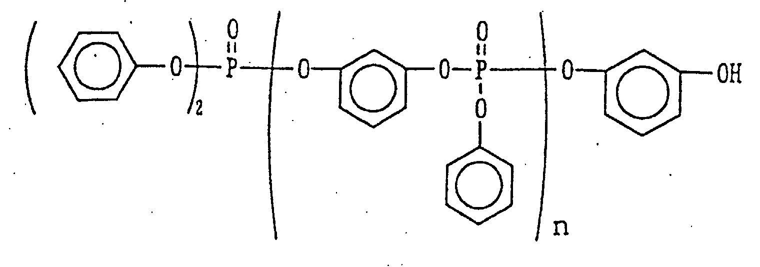

where n is a number of 1 to 5.

### Compound E:

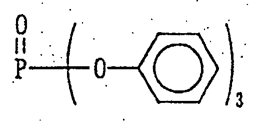

The phosphoric ester flame retardants as component (B) can be used either individually or as a combination of two or more thereof. Component (B) is used in an amount of 0.5 to 30 parts by weight, preferably 1 to 20 parts by weight, per 100 parts by weight of component (A). Less than 0.5 part of component (B) is ineffective. More than 30 parts of component (B) results in a reduction of heat distortion temperature.

The phosphoric ester of formula (1) can be prepared by any known process, such as (a) dehydrochlorination reaction between phosphorus oxychloride and a phenol compound in the presence of a Lewis acid catalyst, (b) reaction between phosphorus oxychloride and 2,6-xylenol followed by reaction with a dihydric phenol, or (c) interesterification reaction between triphenyl phosphate and a polyhydric phenol (e.g., resorcinol) in the presence of a catalyst (e.g., magnesium chloride). These processes preferably has a step of removing an excess of the phenol compound by vacuum evaporation or a step of deactivating and removing the catalyst by use of an adsorbent or washing with water, according to necessity.

The organic phosphoric ester metal salt as component (C), which is represented by formula (5) or (6), includes compound Nos. 1 through 25 listed below.

### Compound No. 1:

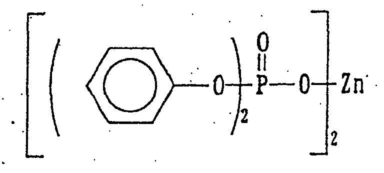

### Compound No. 2:

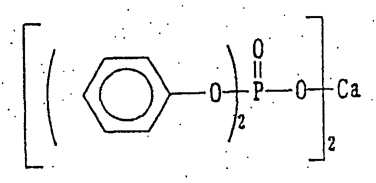

### Compound No. 3:

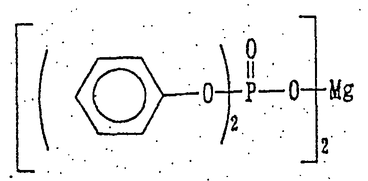

### Compound No. 4:

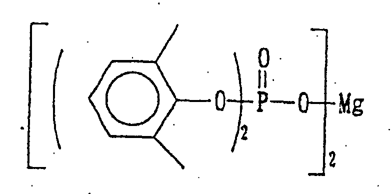

### Compound No. 5:

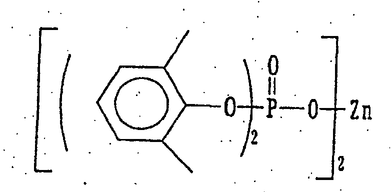

### Compound No. 6:

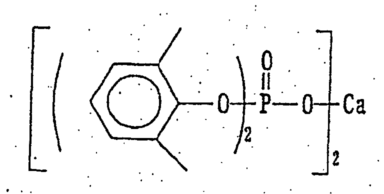

### Compound No. 7:

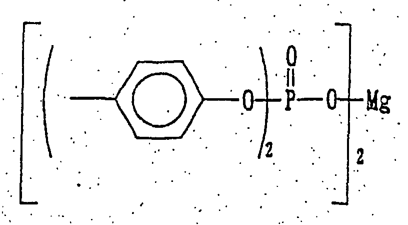

### Compound No. 8:

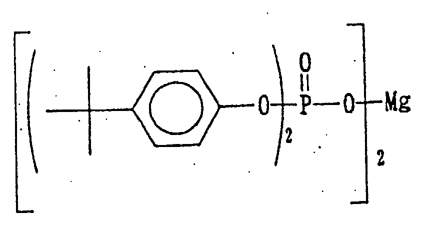

### Compound No. 9:

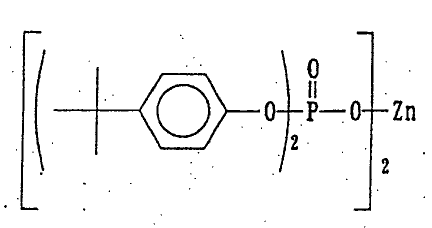

### Compound No. 10:

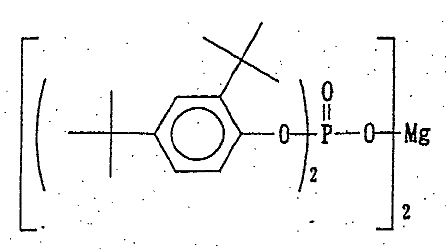

### Compound No. 11:

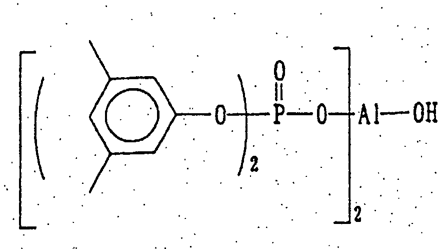

### Compound No. 12:

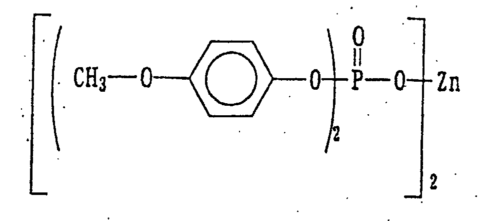

### Compound No. 13:

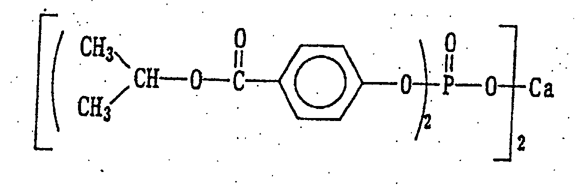

### Compound No.14:

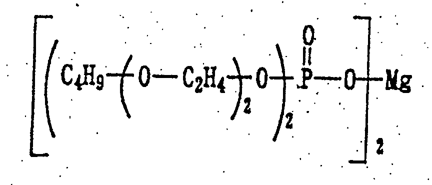

### Compound No. 15:

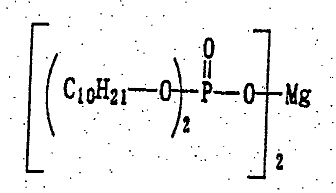

### Compound No. 16:

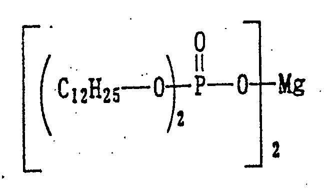

### Compound No. 17:

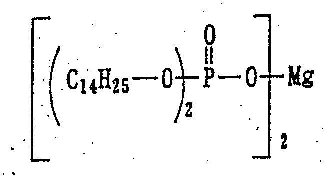

### Compound No. 18:

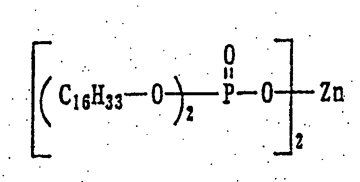

### Compound No. 19:

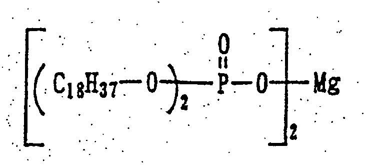

### Compound No. 20:

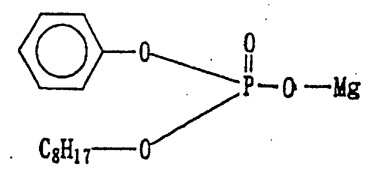

### Compound No. 21:

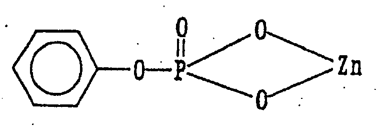

### Compound No. 22:

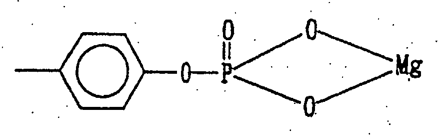

### Compound No. 23:

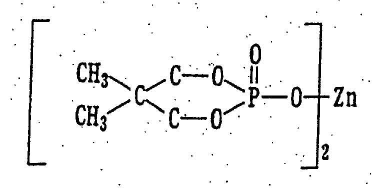

### Compound No. 24:

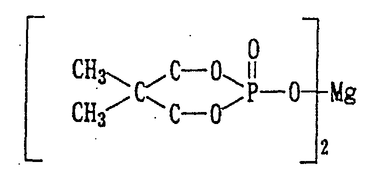

### Compound No. 25:

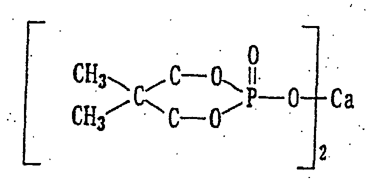

The compounds of formula (5) or (6) are organic phosphoric ester alkaline earth metal salts that have a relatively high decomposition temperature. Therefore, they are capable of providing highly flame-retardant resin compositions without causing the resin to decompose on processing.

Component (C) is used in an amount of 0.005 to 5 parts by weight, particularly 0.01 to 1 part by weight, per 100 parts by weight of the resin (A). When used in amounts less than 0.005 part, component (C) produces little effect as a fame retardation assistant. More than 5 parts of component (C) rather spoils the physical properties of the resin.

Suitable anti-dipping agents as component (D) for use in the invention include fluorine resins, such as polytetrafluoroethylene, polyvinylidene fluoride, and polyhexafluoropropylene; perfluoroalkanesulfonic acid alkali metal or alkaline earth metal salts, such as sodium perfluoromethanesulfonate, potassium perfluoro-n-butanesulfonate, potassium perfluoro-t-butanesulfonate, sodium perfluorooctanesulfonate, and calcium perfluoro-2-ethylhexanesulfonate; and silicone rubbers. These anti-dripping agents can be used either individually or as a combination of two or more thereof.

The anti-dripping agent is used in an amount of 0.05 to 5 parts by weight, preferably 0.1 to 2 parts by weight, per 100 parts by weight of the resin (A). An amount less than 0.05 parts produces only a small non-dripping effect. A resin composition containing greater than 5 parts of the anti-dripping agent tends to undergo appreciable thermal shrinkage on molding only to provide molded articles with reduced dimensional precision. Excessive addition of the anti-dripping agent also leads to an increased cost.

The flame-retardant resin composition according to the present invention is preferably further added at least one or more component selected from a group consisting of (E) zirconium oxide, antimony trioxide and germanium oxide. Zirconium oxide, antimony trioxide and germanium oxide which can be used in the present invention as component (E) preferably has an average particle size of 10 µm or smaller, particularly 5 µm or smaller, especially 3 µm or smaller. Use of particles having a greater average particle size than 10 µm results in serious reductions in flame retardancy and impact strength. Note that the term "average particle size" as used herein denotes an average secondary particle size.

Component (E) to be added is preferably 0.001 to 5 parts by weight, still preferably 0.01 to 3 parts by weight, per 100 parts by weight of the resin (A). Component (E) added in amounts less than 0.001 part produces little effect as a flame retardant. Addition of more than 5 parts of component (E) rather impairs the physical properties of the resin.

If desired, the flame-retardant resin composition of the present invention can be stabilized by adding general-purpose ultraviolet absorbers, antioxidants, light stabilizers, and like additives at any stage, such as mixing of resins or molding.

Useful ultraviolet absorbers include 2-hydroxybenzophenones, such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); 2-(2-hydroxyphenyl)benzotriazoles, such as 2-(2-hydroxy-5-methylphenyl)-benzotriazole, 2-(2-hydroxy-5-t-octylphenyl)benzotriazole, 2-(2-hydroxy-3,5-di-t-butylphenyl)-5-chlorobenzotriazole, 2-(2-hydroxy-3-t-butyl-5-methylphenyl)-5-chlorobenzotriazole, 2-(2-hydroxy-3,5-dicumylphenyl)benzotriazole, 2,2'-methylenebis(4-t-octyl-6-benzotriazolylphenol), 2-(2-hydroxy-3-t-butyl-5-carboxyphenyl)benzotriazole polyethylene glycol ester, 2-[2-hydroxy-3-(2-acryloyloxyethyl)-5-methylphenyl]benzotriazole, 2-[2-hydroxy-3-(2-methacryloyoxyethyl)-5-t-butylphenyl]benzotriazole, 2-[2-hydroxy-3-(2-methacryloyloxyethyl)-5-t-octylphenyl]benzotriazole, 2-[2-hydroxy-3-(2-methacryloyloxyethyl)-5-t-butylphenyl]-5-chlorobenzotriazole, 2-[2-hydroxy-5-(2-methacryloyloxyethyl)phenyl]benzotriazole, 2-[2-hydroxy-3-t-butyl-5-(2-methacryloyloxyethyl)phenyl]benzotriazole, 2-[2-hydroxy-3-t-amyl-5-(2-methacryloyloxyethyl)phenyl]benzotriazole, 2-[2-hydroxy-3-t-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole, and 2-[2-hydroxy-4-(3-methacryloyloxypropyl)phenyl]benzotriazole; 2-(2-hydroxyphenyl)-4,6-diaryl-1,3,5-triazines, such as 2-(2-hydroxy-4-methoxyphenyl)-4,6-diphenyl-1,3,5-triazine, 2-(2-hydroxy-4-hexyloxyphenyl)-4,6-diphenyl-1,3,5-triazine, 2-(2-hydroxy-4-octoxyphenyl)-4,6-bis(2,4-dimethylphenyl)-1,3,5-triazine, 2-[2-hydroxy-4-(3-C₁₂₋₁₃ mixed alkoxy-2-hydroxypropoxy)phenyl]-4,6-bis(2,4-dimethylphenyl)-1,3,5-triazine, 2-[2-hydroxy-4-(2-acryloyloxyethoxy)phenyl]-4,6-bis(4-methylphenyl)-1,3,5-triazine, 2-(2,4-dihydroxy-3-allylphenyl)-4,6-bis(2,4-dimethylphenyl)-1,3,5-triazine, and 2,4,6-tris(2-hydroxy-3-methyl-4-hexyloxyphenyl)-1,3,5-triazine; benzoates, such as phenyl salicylate, resorcinol monobenzoate, 2,4-di-t-butylphenyl 3,5-di-t-butyl-4-hydroxybenzoate, and hexadecyl 3,5-di-t-butyl-4-hydroxybenzoate; substituted oxanilides, such as 2-ethyl-2'-ethoxyoxanilide and 2-ethoxy-4'-dodecyloxanilide; cyanoacrylates, such as ethyl α-cyano-β,β-diphenylacrylate and methyl 2-cyano-3-methyl-3-(p-methoxyphenyl)acrylate; and various metal salts or chelates, particularly nickel or chromium salts or chelates.

The amount of the ultraviolet absorber, if added, is preferably 0.005 to 30 parts, still preferably 0.05 to 20 parts, by weight per 100 parts by weight of the resin (A). Less than 0.005 part is insufficient for producing stabilizing effects. Addition of more than 30 parts produces no further improvement, only to involve waste of material.

Useful antioxidants include phosphorus antioxidants, phenol antioxidants, and sulfur antioxidants. Examples of the phosphorus antioxidants are triphenyl phosphite, tris(2,4-di-t-butylphenyl) phosphite, trisnonylphenyl phosphite, tris(dinonylphenyl) phosphite, tris(mono/di-mixed nonylphenyl) phosphite, bis(2-t-butyl-4,6-dimethylphenyl)ethyl phosphite, diphenyl phosphite, 2,2'-methylenebis(4,6-di-t-butylphenyl)octyl phosphite, diphenyldecyl phosphite, diphenyldiisodecyl phosphite, tributyl phosphite, tris(2-ethylhexyl) phosphite, tridecyl phosphite, trilauryl phosphite, dibutyl phosphite, dilauryl phosphite, trilauryl trithiophosphite, bis(neopentyl glycol)-1,4-cyclohexanedimethyl diphosphite, bis(2,4-di-t-butylphenyl) pentaerythritol diphosphite, bis(2,6-di-t-butyl-4-methylphenyl) pentaerythritol diphosphite, distearyl pentaerythritol diphosphite, phenyl-4,4'-isopropylidenediphenol pentaerythritol diphosphite, tetra(C₁₂₋₁₅ mixed)alkyl-4,4'-isopropylidenediphenyl phosphite, bis[2,2'-methylenebis(4,6-diamylphenyl)] isopropylidenediphenyl phosphite, hydrogenated 4,4'-isopropylidenediphenol polyphosphite, bis(octylphenyl) bis[4,4'-n-butylidenebis(2-t-butyl-5-methylphenol)] 1,6-hexanediol diphosphite, tetra(tridecyl)-4,4'-butylidenebis(2-t-butyl-5-methylphenol) diphosphite, hexa(tridecyl) 1,1,3-tris(2-methyl-5-t-butyl-4-hydroxyphenyl)butane triphosphonite, 9,10-dihydro-9-oxa-10-phosphaphenanthrene-10-oxide, and 2-butyl-2-ethylpropanediol 2,4,6-tri-t-butylphenol monophosphite.

Examples of the phenol antioxidants are 2,6-di-t-butyl-p-cresol, 2,6-diphenyl-4-octadecyloxyphenol, stearyl (3,5-di-t-butyl-4-hydroxyphenyl)-propionate, distearyl (3,5-di-t-butyl-4-hydroxybenzyl) phosphonate, tridecyl 3,5-di-t-butyl-4-hydroxybenzylthioacetate, thiodiethylenebis[(3,5-di-t-butyl-4-hydroxyphenyl) propionate], 4,4'-thiobis(6-t-butyl-m-cresol), 2-octylthio-4,6-di(3,5-di-t-butyl-4-hydroxyphenoxy)-s-triazine, 2,2'-methylenebis(4-ethyl-6-t-butylphenol), bis[3,3-bis(4-hydroxy-3-t-butylphenyl)butyric acid] glycol ester, 4,4'-butylidenebis(4,6-t-butylphenol), 2,2'-ethylidenebis(4,6-di-t-butylphenol), 1,1,3-tris(2-methyl-4-hydroxy-5-t-butylphenyl)butane, bis[2-t-butyl-4-methyl-6-(2-hydroxy-3-t-butyl-5-methylbenzyl)phenyl] terephthalate, 1,3,5-tris(2,6-dimethyl-3-hydroxy-4-t-butylbenzyl) isocyanurate, 1,3,5-tris(3,5-di-t-butyl-4-hydroxybenzyl) isocyanurate, 1,3,5-tris(3,5-di-t-butyl-4-hydroxybenzyl)-2,4,6-trimethylbenzene, 1,3,5-tris[(3,5-di-t-butyl-4-hydroxyphenyl)propionyloxyethyl] isocyanurate, tetrakis[methylene-3-(3,5-di-t-butyl-4-hydroxyphenyl)propionate]methane, 2-t-butyl-4-methyl-6-(2-acryloyloxy-3-t-butyl-5-methylbenzyl)phenol, 3,9-bis[2-(3-t-butyl-4-hydroxy-5-methylhydroxycinnamoyloxy)-1,1-dimethylethyl]-2,4,8,10-tetraoxaspiro[5,5]undecane, and triethylene glycol bis[β-(3-t-butyl-4-hydroxy-5-methylphenyl)propionate].

Examples of the sulfur antioxidants are dialkyl thiodipropionates, such as dilauryl thiodipropionate, dimyristyl thiodipropionate, myristylstearyl thiodipropionate, and distearyl thiodipropionate; and polyol β-alkylmercaptopropionic esters, such as pentaerythritol tetra(β-dodecylmercaptopropionate).

These antioxidants are preferably added in an amount of 0.01 to 50 parts, particularly 0.5 to 30 parts, by weight per 100 parts by weight of the resin (A). Sufficient stabilizing effects are not produced with less than 0.01 part. Addition of more than 50 parts produces no further improvement.

If desired, the flame-retardant resin composition of the present invention can further contain other known flame retardants or flame retardation assistants and various well-known additives, such as pigments, dyes, lubricants, antistatics, blowing agents, reinforcing materials, fillers, parting agents, flow modifiers, and antimicrobials. They can be added at any stage, such as mixing of resins or molding.

Known flame retardants or flame retardation assistants that can be used in combination include other organic phosphorus flame retardants, inorganic phosphorus flame retardants, triazine ring-containing compounds, metal hydroxides; halogen flame retardants, and silicone flame retardants. The reinforcing materials include reinforcing fibers, such as glass fiber, carbon fiber, polyamide fiber, and aromatic polyester fiber. The fillers include calcium carbonate, talc, silica, carbon black, and titanium oxide.

The flame retardant resin composition of the present invention are useful as housing materials in the fields of electric and electronic equipment, communications equipment, and office automation equipment including copiers, printers, facsimiles, and personal computers and as substitutes for metallic parts of automobiles.

The present invention will now be illustrated in greater detail with reference to Examples, but it should be understood that the present invention is not construed as being limited thereto.

### EXAMPLES 1-1 TO 1-6 AND COMPARATIVE EXAMPLES 1-1 TO 1-3

A polycarbonate (PC) resin Iupilon E-2000F (from Mitsubishi Gas Chemical Co., Inc.), a phosphoric ester flame retardant (referred to as "phosphorus flame retardant" in Tables), zirconium oxide, an organic phosphoric ester metal salt (referred to as "phosphoric ester metal salt" in Tables), and polytetrafluoroethylene (PTFE) Teflon 6J (from Du Pont Mitsui Fluorochemical Co., Ltd.) were mixed according to the formulations shown in Tables 1 and 2, extruded from a twin-screw extruder at 280°C and 250 rpm, and pelletized. The resulting compound was injection molded at a cylinder temperature of 280°C to prepare specimens 12.7 mm wide, 127 mm long and 1.6 mm (1/16") thick according to UL-94 standard. The specimens were subjected to UL-94V (vertical burn) test according to the following method. The results obtained are shown in Tables 1 and 2.

### UL Flammability 94V Test:

The specimen was positioned vertically, and a test burner flame was applied to the lower end of the specimen for 10 seconds. After 10 seconds, the flame was removed, and the burning time (the time required to self-extinguish) was recorded. As soon as the flame extinguished, the flame was immediately applied for another 10 seconds. Again the burning time was recorded. Ignition of the cotton layer by any drips of flaming particles was also observed.

The burning time after each flame application and the ignition of the cotton layer were interpreted into a UL-94 flammability rating. The V-0 rating is the lowest flammability. The V-1 rating is less flame retardancy, and V-2 rating is still less flame retardancy. A specimen that was not interpreted into any of these ratings were rated "NR".

**TABLE 1**

| | | Example No. | | | | | |
|---|---|---|---|---|---|---|---|
| | | 1-1 | 1-2 | 1-3 | 1-4 | 1-5 | 1-6 |
| Polycarbonate Resin | | 95.18 | 96.15 | 96.15 | 96.55 | 96.55 | 96.55 |
| Phosphorus Flame Retardant | A (n=1.0) | 4 | - | - | 3 | 3 | 3 |
| | B (n=1.2) | - | 3 | - | - | - | |
| | C (n=1.7) | - | - | 3 | - | - | |
| Zirconium Oxide *1 (avg. particle size: 0.25 µm) | | - | 0.5 | 0.5 | 0.1 | 0.5 | 0.5 |
| Phosphoric Ester Metal Salt (Compound No.) | 1 | 0.5 | 0.05 | 0.05 | - | - | - |
| | 2 | - | - | - | 0.05 | - | - |
| | 9 | - | - | - | - | 0.05 | - |
| | 23 | - | - | - | - | - | 0.05 |
| PTFE | | 0.2 | 0.2 | 0.2 | 0.2 | 0.2 | 0.2 |
| UV-94V (1/16") | | V-0 | V-0 | V-0 | V-0 | V-0 | V-0 |

| | | | | | | | |
|---|---|---|---|---|---|---|---|
| *1: UEP (from Daiichi Kigenso Kagaku Kogyo Co., Ltd.) | | | | | | | |

**TABLE 2**

| | | Comparative Example No. | | |
|---|---|---|---|---|
| | | 1-1 | 1-2 | 1-3 |
| Polycarbonate Resin | | 94.2 | 93.7 | 96.25 |
| Phosphorus Flame Retardant | A (n=1.0) | 5 | 6 | - |
| | B (n=1.2) | - | - | 6 |
| Zirconium Oxide *1 (avg. particle size: 0.25 µm) | | 0.5 | - | 0.5 |
| Zinc Stearate | | - | - | 0.1 |
| PTFE | | 0.2 | 0.2 | 0.2 |
| UV-94V (1/16") | | V-1 | V-1 | NR |

| | | | | |
|---|---|---|---|---|
| *1: UEP (from Daiichi Kigenso Kagaku Kogyo Co., Ltd.) | | | | |

### EXAMPLES 2-1 TO 2-15 AND COMPARATIVE EXAMPLES 2-1 TO 2-4

A polycarbonate resin Iupilon E-2000F (from Mitsubishi Gas Chemical Co., Inc.), an ABS resin Santac AT-05 (from Nippon A & L Inc.), a phosphoric ester flame retardant (phosphorus flame retardant), zirconium oxide, an organic phosphoric ester metal salt (phosphoric ester metal salt), and PTFE Teflon 6J (from Du Pont Mitsui Fluorochemical Co., Ltd.) were mixed according to the formulations shown in Tables 3 to 6, extruded from a twin-screw extruder at 260°C and 250 rpm, and pelletized. The resulting compound was injection molded at a cylinder temperature of 260°C and a mold temperature of 60°C to prepare specimens. The specimens were subjected to UL-94V test in the same manner as in Example 1-1. Further, the oxygen index was measured using the specimens. The results obtained are shown in Tables 3 to 6.

**TABLE 3**

| | | Example No. | | | | | |
|---|---|---|---|---|---|---|---|
| | | 2-1 | 2-2 | 2-3 | 2-4 | 2-5 | 2-6 |
| Polycarbonate Resin | | 72.1 | 72.1 | 72.2 | 71.9 | 71.9 | 71.9 |
| ABS Resin | | 18.0 | 18.0 | 18.2 | 18.0 | 18.0 | 18.0 |
| Phosphorus Flame Retardant A (n=1.0) | | 9.0 | 9.0 | 9.0 | 9.0 | 9.0 | 9.0 |
| Zirconium Oxide *1 (avg. particle size: 0.25 µm) | | 0.5 | 0.5 | 0.5 | 0.5 | 0.5 | 0.5 |
| Phosphoric Ester Metal Salt (Compound No.) | 1 | 0.15 | - | - | - | - | - |
| | 2 | - | 0.14 | - | - | - | - |
| | 4 | - | - | 0.08 | - | - | - |
| | 5 | - | - | - | 0.09 | | |
| | 6 | - | - | - | - | 0.09 | - |
| | 8 | - | - | - | - | - | 0.19 |
| PTFE | | 0.3 | 0.3 | 0.3 | 0.3 | 0.3 | 0.3 |
| UV-94V (1/16") | | V-0 | V-0 | V-0 | V-0 | V-0 | V-0 |
| Oxygen Index (3.2 mm t) | | 26.5 | 26.5 | 26.5 | 26.5 | 26.0 | 26.0 |

| | | | | | | | |
|---|---|---|---|---|---|---|---|
| *1: UEP (from Daiichi Kigenso Kagaku Kogyo Co., Ltd.) | | | | | | | |

**TABLE 4**

| | | Example No. | | | | | |
|---|---|---|---|---|---|---|---|
| | | 2-7 | 2-8 | 2-9 | 2-10 | 2-11 | 2-12 |
| Polycarbonate Resin | | 72.0 | 72.1 | 72.0 | 71.9 | 71.9 | 71.9 |
| ABS Resin | | 18.0 | 18.0 | 18.0 | 18.0 | 18.0 | 18.0 |
| Phosphorus Flame Retardant B (n=1.2) | | 9.0 | 9.0 | 9.0 | - | - | - |
| Phosphorus Flame Retardant C (n=1.7) | | - | - | - | 9.0 | 9.0 | 9.0 |
| Zirconium Oxide *1 (avg. particle size: 0.25 µm) | | 0.5 | 0.5 | 0.5 | 0.5 | 0.5 | 0.5 |
| Phosphoric Ester Metal Salt (Compound No.) | 9 | 0.3 | - | - | - | - | - |
| | 11 | - | 0.5 | - | - | - | - |
| | 12 | - | - | 0.5 | - | - | - |
| | 17 | - | - | - | 0.5 | - | - |
| | 19 | - | - | - | - | 0.5 | - |
| | 23 | - | - | - | - | - | 0.1 I |
| PTFE | | 0.3 | 0.3 | 0.3 | 0.3 | 0.3 | 0.3 |
| UV-94V (1/16") | | V-0 | V-0 | V-0 | V-0 | V-0 | V-0 |
| Oxygen Index (3.2 mm t) | | 25.5 | 26.0 | 25.5 | 26.0 | 26.0 | 25.5 |

| | | | | | | | |
|---|---|---|---|---|---|---|---|
| *1: UEP (from Daiichi Kigenso Kagaku Kogyo Co., Ltd.) | | | | | | | |

**TABLE 5**

| | Comparative Example No. | | |
|---|---|---|---|
| | 2-13 | 2-14 | 2-15 |
| Polycarbonate Resin | 72.7 | 72.7 | 72.7 |
| ABS Resin | 18.2 | 18.2 | 18.2 |
| Phosphorus Flame Retardant B (n=1.1) | 9.0 | 9.0 | 9.0 |
| Zirconium Oxide *2 (catalyst grade) | 0.05 | - | - |
| Antimony Trioxide Sb₂O₃ | - | 0.05 | - |
| Germanium Oxide GeO₂ | - | - | 0.05 |
| Phosphoric Ester Metal Salt (Compound No. 9) | 0.1 | 0.1 | 0.1 |
| PTFE | 0.3 | 0.3 | 0.3 |
| UV-94V (1/16") | V-0 | V-0 | V-0 |
| Oxygen Index (3.2 mm t) | 26.5 | 26.5 | 27.0 |

| | | | |
|---|---|---|---|
| *1: RC-100 (from Daiichi Kigenso Kagaku Kogyo Co., Ltd.) | | | |

**TABLE 6**

| | Comparative Example No. | | | |
|---|---|---|---|---|
| | 2-1 | 2-2 | 2-3 | 2-4 |
| Polycarbonate Resin | 72.2 | 71.8 | 72.0 | 72.1 |
| ABS Resin | 18.0 | 17.9 | 18.0 | 18.0 |
| Phosphorus Flame Retardant A (n=1.0) | 9.0 | 10.0 | - | - |
| Phosphorus Flame Retardant B (n=1.2) | - | - | 9.0 | 9.0 |
| Zirconium Oxide (avg. particle size: 0.25 µm) *1 | 0.5 | - | 0.5 | 0.5 |
| Phosphoric Ester Metal Salt (Comparative Compound No. 1) | - | - | 0.2 | - |
| Potassium Perfluorobutane-sulfonate | - | - | - | 0.08 |
| PTFE | 0.3 | 0.3 | 0.3 | 0.3 |
| UV-94V (1/16") | V-1 | V-1 | NR | NR |
| Oxygen Index (3.2 mm t) | 27.2 | 26.6 | 25.5 | 25.5 |

| | | | | |
|---|---|---|---|---|
| *1: UEP (from Daiichi Kigenso Kagaku Kogyo Co., Ltd.) | | | | |

### Comparative Compound No. 1:

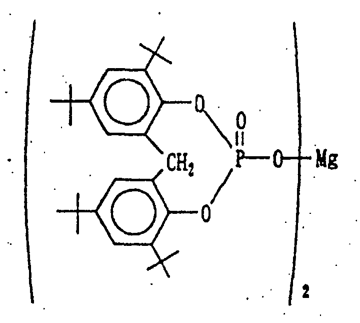

Incorporation of a specific phosphoric ester metal salt into a resin composition containing a phosphoric ester flame retardant provides a resin composition with improved flame retardancy.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

This application claims the priority of Japanese Patent Application No. 2001-319204 filed on October 17, 2001 and Japanese Patent Application No. 2002-266036 filed on September 11, 2002, which are incorporated herein by reference.

## Claims

1. A flame-retardant resin composition comprising (A) 100 parts by weight of a synthetic resin, (B) 0.5 to 30 parts by weight of a phosphoric ester flame retardant represented by formula (1): 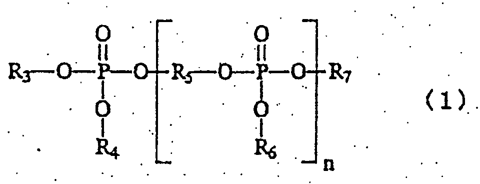 wherein R₃, R₄, R₆, and R₇, which may be the same or different, each represent an alkyl group having 1 to 10 carbon atoms or an aromatic group represented by formula (2); R₅ represents a divalent aromatic group . represented by formula (3) or (4); and n represents 0 to 30; 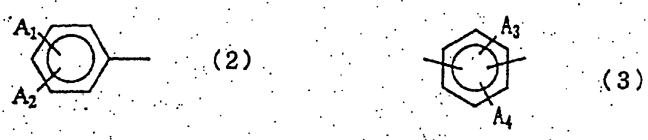 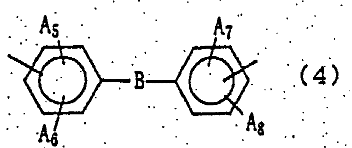 wherein A₁ and A₂ each independently represent a hydrogen atom, a hydroxyl group or an alkyl group having 1 to 10 carbon atoms; A₃, A₄, A₅, A₆, A₇, and A₈ each independently represent a hydrogen atom, an alkyl group having 1 to 4 carbon atoms, a cycloalkyl group, an aryl group, an alkoxy group, a nitro group, a halogen atom or a cyano group; B represents a single bond, a divalent sulfur atom, a sulfone group, an alkylidene group having 1 to 5 carbon atom or an alkylene group having 1 to 5 carbon atoms,
(C) 0.005 to 5 parts by weight of an organic phosphoric ester metal salt represented by formula (5) or (6): 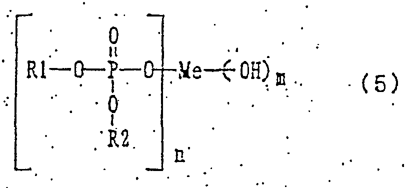 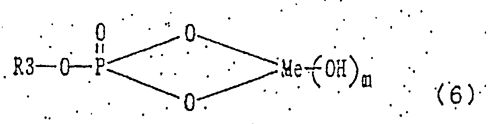 wherein R₁, R₂, and R₃ each independently represent an alkyl group having 1 to 30 carbon atoms, an aryl group or an aryl group substituted with an alkyl group, an alkoxy group, a cycloalkyl group, a phenyl group, a phenoxy group or -COOR₄, or R₁ and R₂ are taken together to form an alkylene group; R₄ represents a hydrogen atom or an alkyl group having 1 to 18 carbon atoms;
Me represents Ca, Mg, Zn or Al; n represents 1 or 2; and m represents 0 or 1,
and (D) 0.05 to 5 parts by weight of an anti-dripping agent.

2. The flame-retardant resin composition according to claim 1 comprising (A) 100 parts by weight of said synthetic resin, (B) 1 to 20 parts by weight of said phosphoric ester flame retardant, (C) 0.01 to 1 parts by weight of said organic phosphoric ester metal salt and (D) 0.1 to 2 parts by weight of said anti-dripping agent.

3. The flame-retardant resin composition according to claims 1 or 2, wherein said synthetic resin (A) is a polycarbonate resin.

4. The flame-retardant resin composition according to claims 1 or 2, wherein said synthetic resin (A) is a polymer blend comprising a polycarbonate resin and a styrene resin.

5. The flame-retardant resin composition according to claim 4, wherein said styrene resin is an acrylonitrile-butadiene-styrene copolymer resin.

6. The flame-retardant resin composition according to claims 1 or 2, wherein said synthetic resin (A) is a polyphenylene ether resin.

7. The flame-retardant resin composition according to any one of claims 1 to 6, wherein said organic phosphoric ester metal salt (C) is a compound represented by formula (7): 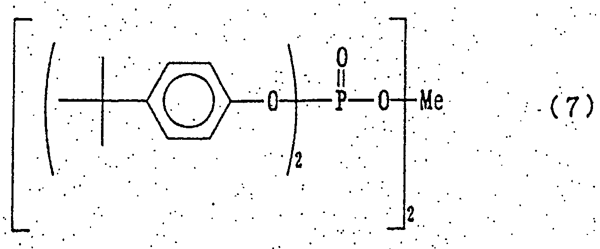 wherein Me represents Ca, Mg or Zn.

8. The flame-retardant resin composition according to claim 7, wherein Me in said formula (7) is Ca.

9. The flame-retardant resin composition according to claim 7, wherein Me in said formula (7) is Mg.

10. The flame-retardant resin composition according to claim 7, wherein Me in said formula (7) is Zn.

11. The flame-retardant resin composition according to any one of claims 1 to 6, wherein said organic phosphoric ester metal salt (C) is a compound represented by formula (8): 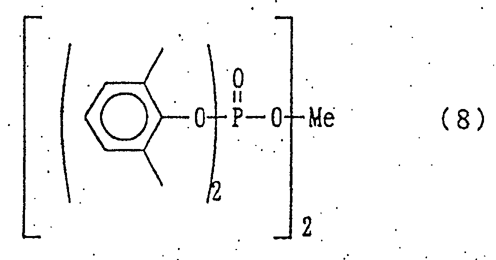 wherein Me represents Ca, Mg or Zn.

12. The flame-retardant resin composition according to claim 11, wherein Me in said formula (8) is Ca.

13. The flame-retardant resin composition according to claim 11, wherein Me in said formula (8) is Mg.

14. The flame-retardant resin composition according to claim 11, wherein Me in said formula (8) is Zn.

15. The flame-retardant resin composition according to any one of the preceding claims wherein n in formula (1) is 1 to 10.

16. The flame-retardant resin composition according to any one of the preceding claims, wherein, in formula (1), R₃, R₄, R₆, and R₇ each represent an aromatic group represented by formula (2), R₅ represents a divalent aromatic group represented by formula (3), and A₁, A₂, A₃, and A₄ each represent a hydrogen atom.

17. The flame-retardant resin composition according to any one of claims 1 to 15, wherein, in formula (1), R₃, R₄, R₆, and R₇ each represent an aromatic group represented by formula (2), R₅ represents a divalent aromatic group represented by formula (3), A₁ and A₂ each represent a methyl group, and A₃ and A₄ each represent a hydrogen atom.

18. The flame-retardant resin composition according to any one of claims 1 to 15, wherein, in formula (1), R₃, R₄, R₆, and R₇ each represent an aromatic group represented by formula (2), R₅ represents a divalent aromatic group represented by formula (4), A₁, A₂, A₅, A₆, A₇, and A₈ each represent a hydrogen atom, and B represents an isopropylidene group.

19. The flame-retardant resin composition according to any one of the preceding claims, which further comprises (E) 0.001 to 5 parts by weight of at least one or more component selected from a group consisting of zirconium oxide, antimony trioxide and germanium oxide per 100 parts by weight of the synthetic resin (A).

20. The flame-retardant resin composition according to claim 19, wherein said component (E) is zirconium oxide.

21. The flame-retardant resin composition according to claim 19, wherein said component (E) is antimony trioxide.

22. The flame-retardant resin composition according to claim 19, wherein said component (E) is germanium oxide.

23. The flame-retardant resin composition according to any one of the preceding claims, wherein said anti-dripping agent is polytetrafluoroethylene.
